(19) Europäisches Patentamt
European Patent Office
Office européen des brevets

(11) **EP 2 246 232 A1**

(12) **EUROPEAN PATENT APPLICATION**

(43) Date of publication:
**03.11.2010 Bulletin 2010/44**

(51) Int Cl.:
**B60W 30/08** (2006.01)        **B60W 30/16** (2006.01)
**G06F 9/50** (2006.01)          **G06K 9/00** (2006.01)

(21) Application number: **09159143.8**

(22) Date of filing: **30.04.2009**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(71) Applicant: **Honda Research Institute Europe GmbH**
**63073 Offenbach/Main (DE)**

(72) Inventors:
 • **Dittes, Benjamin**
  **60599 Frankfurt (DE)**

 • **Heracles, Martin**
  **63179 Obertshausen (DE)**

(74) Representative: **Rupp, Christian**
  **Mitscherlich & Partner**
  **Patent- und Rechtsanwälte**
  **Sonnenstraße 33**
  **80331 München (DE)**

Remarks:
Amended claims in accordance with Rule 137(2) EPC.

(54) **Driver assistance system**

(57)    The invention relates to a driver assistance controller, comprising:

- A plurality of computing modules, arranged in layers (L1...Ln), where each computing module is provided with:

a. means for receiving sensorial input data,

b. means for receiving top-down information Ti, i>m, from higher layer computing modules,

c. means for executing an internal dynamic Dm,

d. means for reading representations Rj of lower layer computing modules Lj, j<m,

e. means for creating a representation Rm,

f. means for sending top-down information Tm to a module of a lower layer Lj, j<m,

g. means for outputting sending actuator commands Mm and command priorities Pm,

h. means for reporting the current quality of service to a central quality controller,

- A central quality controller to handle quality of service information, and

- Means of selecting one or more motor commands Mm according to their priorities Pm.

Fig. 3

**Description**

The present invention relates to the field of driver assistance systems, i.e. systems which gather signals representing the environment of a vehicle (automobile, motorbike, plane, boat,...), process such signals on board and output signals to an actuator of the vehicle in order to assist a human person (driver, pilot,...) controlling the vehicle. One example is a braking assistance system in a car or other road vehicle.

In real-world scenarios, driver assistance systems are often faced with an overwhelming abundance of sensory data, like for instance the camera images taken while on an inner city road. On the other hand, the amount of processing power that can be carried on-board is limited. To handle this abundant data with limited resources, the system must select important points in the input data space before launching a (usually computationally expensive) detailed analysis.

Since the preferred application of the invention is driver assistance systems analyzing camera images this will be called (for purely illustrative purposes) in the following "visual scene exploration" and the important data points "visual targets".

Additionally or alternatively other signal sources (infrared, radar, Lidar, acoustical signals) can be used in the framework of the invention.

There exist multiple algorithms performing visual attention computation [1,3]. However, all of these algorithms perform only the task of selecting the most salient position in an image based on parameters provided by the user or other parts of the system. Therefore the task of detecting all important elements, according to current scene context, in a self-contained manner can only be solved by an integrated system consisting of more than this central visual attention.

As an integration problem, this is interesting because it does not simply require a sequence of processing steps producing a set of visual targets given the input data. Rather, there is a dualism between scene exploration and scene analysis: based on a set of visual targets, the analysis of these targets may yield the necessity to shift parameters in the scene exploration sub-system. This may include setting parameters in other algorithms, like the visual attention, or directing the focus of the scene exploration to areas where important objects are expected to appear. This reflux of data from scene analysis to scene exploration is what is called top-down modulation and what makes system integration more interesting than sequential composition.

Object of the invention:

It is the object of the present to propose a driver assistance system which is capable of working in difficult environments, such as e.g. braking on narrow a path.

This object is achieved by means of the features of the independent claims. The dependent claims develop further the central idea of the invention.

A first aspect of the invention relates to a driver assistance controller, comprising:

- A plurality of computing modules, arranged in layers (L1...Ln), where each computing module is provided with:

 a. means for receiving sensorial input data,
 b. means for receiving top-down information Ti, i>m, from higher layer computing modules,
 c. means for executing an internal dynamic Dm,
 d. means for reading representations Rj of lower layer computing modules Lj, j<m,
 e. means for creating a representation Rm,
 f. means for sending top-down information Tm to a module of a lower layer Lj, j<m,
 g. means for outputting sending actuator commands Mm and command priorities Pm,
 h. means for reporting the current quality of service to a central quality controller,

- A central quality controller to handle quality of service information, and
- Means of selecting one or more motor commands Mm according to their priorities Pm.
 Each module may

 a. be designed to start in the absence of any or all of the higher layer computing modules Li, i>m,
 b. react to top-down information received by higher layer computing modules Li, i>m as soon as they are active, and
 c. continue to function when any or all of the higher layer computing modules Li, i>m become inactive after having been active.

Each computing module may

a. be provided with means for measuring the validity of received top-down information from a higher layer computing module Li, i>m, and
b. utilize the measured validity to select the top-down information from the highest layer computing module Li that is valid.

Each computing module may

a. adapt its means for measuring validity of received top-down information from a higher layer computing module Li, i>m, by measuring the typical temporal behavior of the top-down information, and
b. declare the information invalid if the interval between two received values deviates from this usual behavior.

Said central quality controller may receive quality of service data from all running layer computing modules and reacts to this information in order to improve the overall system quality of service.

Said central quality controller, based on quality of service data from all running computing modules, may be designed to improve the overall system quality of service by

a. Distributing load among computing modules by means of setting operating system priorities in case a computing module Lm indicates insufficient computing resources,

b. Restarting a computing module Lm in case it failed because of a software fault, and

c. Activating a hardware backup to restart a computing module Lm in case it failed because of a hardware fault. Quality of service data from all running computing modules can be made available by means of an on-board display system or a CAN port.

A first layer L1 computing module may be designed to

a. receive top-down information of braking target(s) in 3d space according to claims 3 to 4,

b. receive speed, and yaw information from sensors of the car,

c. if top-down targets were received, control the braking of the car to stop before the requested target by means of generating motor commands M1, and

d. provide quality of service data according to a sufficiently high frequency of proprioceptive information and processing.

A second layer computing L2 module may be designed to

a. acquire left and right images from on-board color cameras,

b. acquire laser range data from an on-board laser range finder,

c. perform disparity and optical flow computation and

d. thereby forming a representation R2 containing images, laser data, disparity and optical flow, and

e. provide quality of service data according to a sufficiently high frequency of input data and processing.

A third layer computing module L3 may be designed to

a. perform a saliency computation on data included in R2,

b. receive top-down information about a spatial prior and saliency weights according to claims 3 to 4,

c. combine the saliency maps with the saliency weights and the spatial prior to determine the point of interest,

d. thereby forming a representation R3 containing the point of interest, and

e. provide quality of service data according to a sufficiently high frequency of received information R2 and processing.

A fourth layer computing module L4 may be designed to

a. perform a drive path computation on data included in R2,

b. utilize this path to generate a spatial prior on the side of the road and on obstacles in the path,

c. utilize this information to estimate drive path width and generates a brake target if the path becomes too narrow,

d. thereby forming a representation R4 containing the path and the spatial prior,

e. send the spatial prior as top-down information to layer L3,

f. send the brake target (if any) as top-down information to layer L1, and

g. provide quality of service data according to a sufficiently high frequency of received information R2 and processing.

A fifth layer computing module L5 may be designed to

a. perform a segmentation and image classification based on data included in R2 around the point of interest data included in R3,

b. thereby forming a representation R5 with the segmented region and the classifier result, including confidence and

c. provide quality of service data according to a sufficiently high frequency of received information R2 and R3 and processing.

A sixth layer computing module L6 may be designed to

a. perform temporal stabilization of segments and classifier results included in R5 and segment properties included in R2 over time,

b. if a sufficiently confident stabilized measurement was classified as an obstacle and is near to the vehicle, generates a brake target for that obstacle,

c. from all stabilized objects, creates a spatial prior with high activation in areas where no objects appear in the memory,

d. send the brake target (if any) as top-down information to layer L1,

e. integrate the spatial prior with information contained in R4 and sends it as top-down information to layer L3, and

f. provides quality of service data according to a sufficiently high frequency of received information R2, R4 and R5 and processing.

Further features, advantages and objects of the present invention will become evident to the skilled person when reading the following description of embodiments of the invention, when taken in conjunction with the figures of the enclosed drawings.

Fig. 1 shows modules of a hierarchical and integrated system according to the invention,

Fig. 2 shows an overview of an implementation of a hierarchical system, and

Fig. 3 shows a illustrative non-limiting example of a system according to the present invention.

The invention proposes a driver assistance controller performing e.g. autonomous braking based on visual and non-visual sensor data. The controller reacts to salient object in the scene which are recognized by an object recognition system and to a drive path computation which detects narrow street regions, the motor command having the highest priority allocated that priority will prevail and will thus actually be executed.

The actuators are actuators which are able to influence the movement of the associated vehicle, such as for example steering wheel, brakes, etc.

The incremental architecture approach according to the present invention

For the domain of driver assistance systems the invention copes with the following requirements:

- The high processing load requires sub-systems to be distributed to multiple computing modules, thus they run asynchronously in parallel. Furtheron, the sub-systems continue to work without modifications when new sub-systems are added,
- Operating in a real-world domain requires a high level of robustness to errors within the system, which is why the sub-systems are designed to continue to work even if some of the other sub-systems fail.

The approach presented in the invention entails several benefits:

- Incremental Composition: Higher layers can be added to a running system, thus providing top-down modulation or additional motor commands, increasing system performance without restarting the whole system,
- Graceful Decay: The failure of a layer only a affects the layers on top of it, all lower layers will continue to function and still provide an acceptable, albeit lower, level of performance,
- Reduction of Design Space: Extending an existing integrated system by adding a new layer does not require modification of existing layers, thus reducing integration complexity.

In the following we will discuss the main challenges in composing systems in such a way:

The Influence of Layer Ordering

- The key to success or failure of a system integrated with this approach is the hierarchical composition of layers. The strongest constraint imposed by the approach is the unidirectional dependence of layers, but in some cases this is not enough to arrive at a unique ordering.

Often, communication can be formulated as top-down modulation instead of a bottom-up channel, thus reversing the order. However, there are additional guides: for one, the ordering defines the final behavior of each of the possible running subsystems

$$L_{1..i, i=2..n}$$

consisting of only a sub-set of layers. Thus, if one layer Lj is necessary for the first intended subsystem to function while another layer Lk would add additional functionality to the next-higher sub-system, Lj must be sorted under Lk. Secondly, layers are usually sorted based on their temporal behavior, where lower layers tend to operate at higher frequencies than higher layers.

Handling Top-down Information

To provide the demanded independence of layers, the most important requirement is that layers must be able to react to top-down information without depending on it. More precisely, there are three cases to be considered:

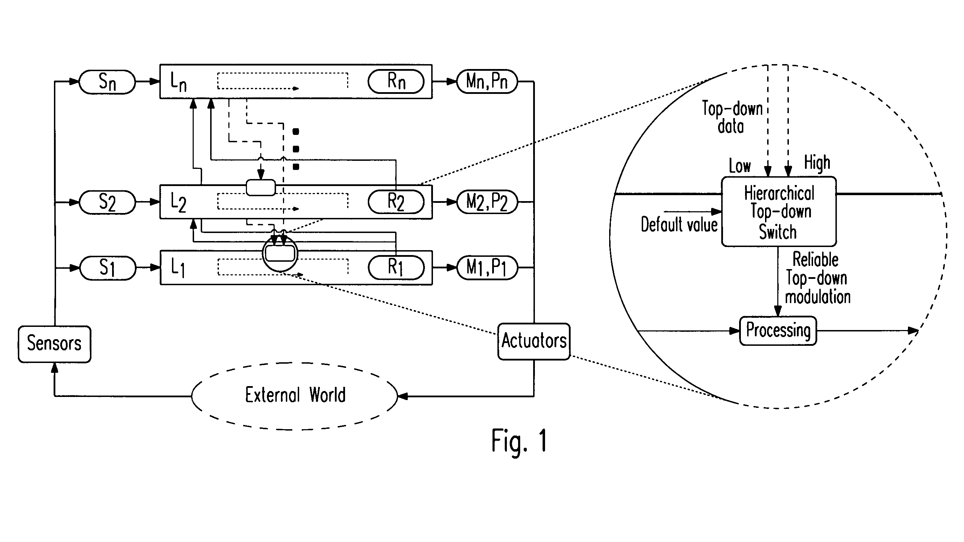

- a layer must be able to function if the layer(s) sending the top-down information are not present yet, it must use the received top-down information immediately once the higher layers appear and it must return to default operation if higher layers fail. We propose to solve all three by the help of a 'hierarchical switch' (Fig. 1(B)), a component which receives all top-down data of one type, analyzes their temporal behavior and returns the highest one which is valid, or a default if none is valid. Validity is computed by comparing the current age of present data to the typical temporal behavior of data coming from the sending layer. If data is older than the mean delay plus two standard deviations it is considered invalid.

To illustrate this integration methodology we will now proceed to describe the scene exploration system built according to it.

The visual processing hierarchy

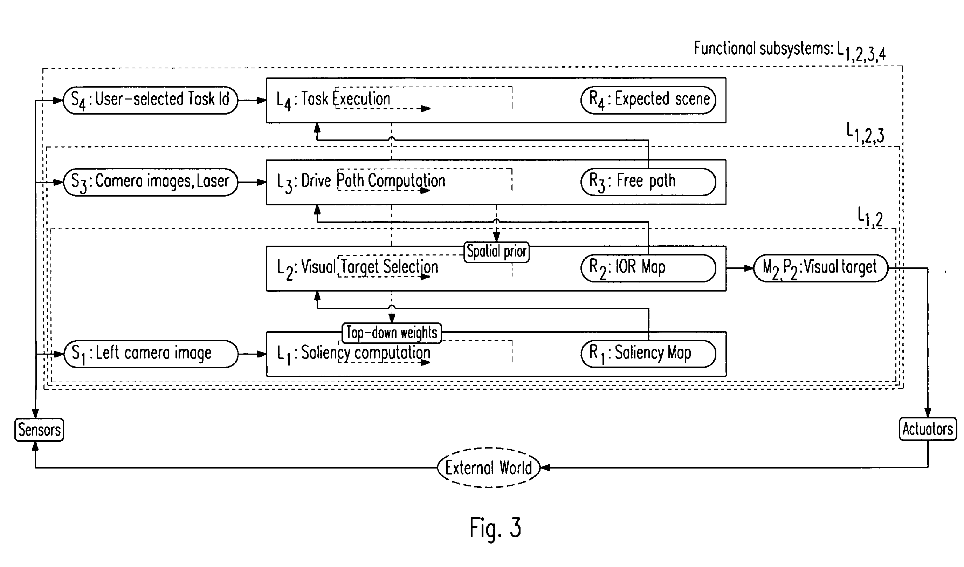

To approach the problem of scene exploration the invention proposes to integrate a complete system by combining a number of existing algorithms in the manner described in the previous section. The system is composed of four layers (see Fig. 3): it combines saliency computation, drive path computation, visual target selection including inhibition of return and a parameterization with task-relevant modulatory data.

Saliency computation

For this lowest layer L1 we use the algorithm introduced in [7]: it evaluates a multitude of image features (DoG, Gabor, RGBY, motion,...), it is tuned to real-world scenarios and it allows setting bottom-up and top-down weights to specify selectivity. The result is an image-sized, oat-valued saliency map using either bottom-up or top-down weights, depending on top-down modulation; therefore this is the first point in the system where top-down switching is needed.

Visual target selection

The core task of the scene exploration system is the selection of a visual target, performed in L2. Here, we use the saliency map produced by L1, multiply it with a top-down spatial prior and select the maximum as the current visual target. A top-down switching is needed to reliably integrate this top-down spatial prior under the constraint of loose coupling to the higher layers producing it. To get more than one visual target per image, tie invention uses an inhibition of return (IOR, see [8]) by subtracting a Gaussian at the last selected position from an IOR map. This map is provided to higher layers in case they, too, need to focus processing on regions that have not been covered yet. In our experiments, we used this process to generate four visual targets per image.

Drive path computation

In the car domain, one very helpful spatial prior can be extracted from the drive path in front of the car, i.e. to focus on obstacles and the side of the road. The drive path itself is computed in L3 as described in [9] by using segmentation on a number of sensors based on training regions in the image, combined with a temporal integration. The result is a binary road map which is then convoluted to produce a spatial prior with a broad range of excitation around the edges of the drive path and much less on the path or in the sky. This spatial prior is then given to L2 as top-down modulation.

Task-relevant parameterization

In addition to improving the spatial selectivity, a correct set of top-down weights can greatly increase the performance of the saliency computation. Layer L4 therefore receives a task identifier as a parameter and gives a matching weight set to L1.

The described system has two points of top-down switching: one for receiving the top-down weights in L1 and one for receiving the spatial prior in L2. Both are using the mechanism described in Sec. 2, without any specialization needed. Both provide a default in case that no top-down information is received: for L1 this is an empty weights set which is telling the saliency to use the bottom-up weights, for L2 this is an empty spatial prior with neither excitation nor inhibition. In this manner, each layer can be designed, implemented and started without caring about the subsequent higher layers.

A important aspect of the invention resides in the way this controller is composed internally: it consists of (ordered) processing computing module layers with clearly specified communication channels (sensor, actor, bottom-up and top-down).

The system robustly functions even when layers are added, crash or are restarted while the system is running. This is possible because of novel methods to integrate information sent from higher layers to lower layers providing an unprecedented degree of system robustness, failure tolerance and graceful performance decay in case of severe errors.

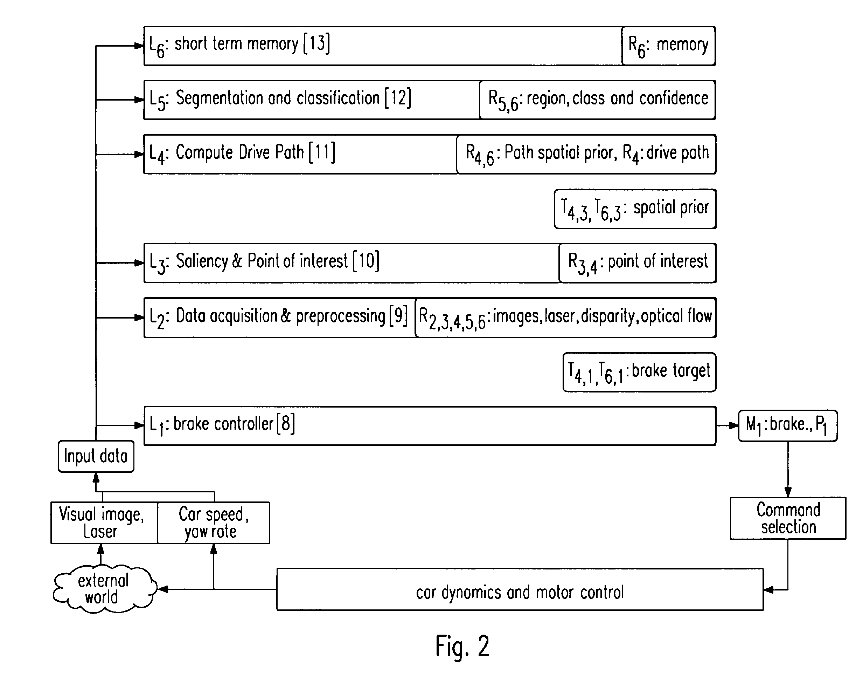

Figure 2 shows a specific non-limiting application example of the present invention for a driving assistance system for cars.

The environment of the car, referred to as "external world", is sent by different sensors, such as for example a visual image sensor, a laser sensor, a car speed sensor, a yaw rate sensor etc. The sensorial input is called "input data" and is forwarded to the layered computing modules L1 to L5 of the computing unit.

Computing module L1 is responsible for a brake controlling and can issue a break command thus influencing the car dynamics and eventually the motor.

The computing module L2 is responsible for data acquisition and pre-processing.

The computing module L3 is responsible for the computation of saliency and point of interest.

The computing module L4 computes the drive path.

The computing module L5 carries out a segmentation and classification of sensorial input data.

The computing module L6 is a short-term memory.

**References**

1. Frintrop, S., Backer, G., Rome, E.: Goal-directed search with a top-down modulated computational attention system. Lecture notes in computer science 3663 (2005) 117

2. Itti, L., Koch, C., Niebur, E.: A model of saliency-based visual attention for rapid scene analysis. IEEE Transactions on pattern analysis and machine intelligence 20(11) (1998) 1254{1259

3. Michalke, T., Gepperth, A., Schneider, M., Fritsch, J., Goerick, C.: Towards a human-like vision system for resource-constrained intelligent cars. (2007)

4. Goerick, C., Bolder, B., Jan—en, H., Gienger, M., Sugiura, H., Dunn, M., Mikhailova, I., Rodemann, T., Wersing, H., Kirstein, S.: Towards incremental hierarchical behavior generation for humanoids. Proceedings of the International Conference on Humanoids (2007)

5. Michalke, T., Fritsch, J., Goerick, C.: Enhancing robustness of a saliency-based attention system for driver assistance. Lecture Notes in Computer Science 5008 (2008) 43

6. Klein, R.: Inhibition of return. Trends in Cognitive Sciences 4(4) (2000) 138{147

7. Michalke, T., Kastner, R., Fritsch, J., Goerick, C.: A generic temporal integration approach for enhancing feature-based road-detection systems. 11th Int1 Conf on Intelligent Transportation Systems (2008) 657{663

## Glossary

Control Layer:

Contained control unit, connected by explicit channels to other layers

Top-down information:

Data sent from a higher layer computing module to a lower layer computing module, to modulate, influence or trigger computation there

Representation Data:

Data provided by a layer to be used by higher layers

Input data:

Data from external and/or internal sensors, including color images, on-board laser, speed and yaw measurement

Motor command:

Data for controlling actors, e.g. steering angle or brake targets

Command priority:

Integer communicated together with a motor command to allow motor command sorting by priority

Saliency computation:

Computing method using e.g. several edge, color, depth queues to extract a simple form of visual attention map

Drive path computation:

Computing method to analyze input data to extract a region of the image belonging to drivable area

Temporal stabilization:

Computing method to verify image segments and classifier output by comparing them to data sets computed at different points in time, thus filtering out unstable measurements

## Claims

1. A driver assistance controller, comprising:

   - A plurality of computing modules, arranged in layers (L1...Ln), where each computing module is provided with:

     a. means for receiving sensorial input data,
     b. means for receiving top-down information $T_i$, $i > m$, from higher layer computing modules,
     c. means for executing an internal dynamic $D_m$,
     d. means for reading representations $R_j$ of lower layer computing modules $L_j$, $j < m$,
     e. means for creating a representation $R_m$,
     f. means for sending top-down information $T_m$ to a module of a lower layer $L_j$, $j < m$,
     g. means for outputting sending actuator commands $M_m$ and command priorities $P_m$,
     h. means for reporting the current quality of service to a central quality controller,

   - A central quality controller to handle quality of service information, and
   - Means of selecting one or more motor commands $M_m$ according to their priorities $P_m$.

2. A driver assistance controller according to claim 1, wherein each module $L_m$

   a. is designed to start in the absence of any or all of the higher layer computing modules $L_i$, $i > m$,
   b. reacts to top-down information received by higher layer computing modules $L_i$, $i > m$ as soon as they are active,
   c. continues to function when any or all of the higher layer computing modules $L_i$, $i > m$ become inactive after having been active.

**3.** A driver assistance controller according to claim 2, wherein each computing module Lm

a. is provided with means for measuring the validity of received top-down information from a higher layer computing module Li, i>m, and
b. utilizes the measured validity to select the top-down information from the highest layer computing module Li that is valid.

**4.** A driver assistance controller according to claim 3, wherein each computing module Lm

a. adapts its means for measuring validity of received top-down information from a higher layer computing module Li, i>m, by measuring the typical temporal behavior of the top-down information, and
b. declares the information invalid if the interval between two received values deviates from this usual behavior.

**5.** A driver assistance controller according to claims 1 to 4, wherein said central quality controller receives quality of service data from all running layer computing modules and reacts to this information in order to improve the overall system quality of service.

**6.** A driver assistance controller according to claim 5, wherein said central quality controller, based on quality of service data from all running computing modules, is designed to improve the overall system quality of service by

a. Distributing load among computing modules by means of setting operating system priorities in case a computing module Lm indicates insufficient computing resources,
b. Restarting a computing module Lm in case it failed because of a software fault, and
c. Activating a hardware backup to restart a computing module Lm in case it failed because of a hardware fault.

**7.** A driver assistance controller according to claim 6, wherein quality of service data from all running computing modules is made available by means of an on-board display system or a CAN port.

**8.** A driver assistance controller according to claims 2 to 7, wherein a first layer computing module L1 a. receives top-down information of braking target(s) in 3d space according to claims 3 to 4,

b. receives speed, and yaw information from sensors of the car,
c. if top-down targets were received, controls the braking of the car to stop before the requested target by means of generating motor commands M1, and
d. provides quality of service data according to a sufficiently high frequency of proprioceptive information and processing.

**9.** A driver assistance controller according to claim 8, wherein a second layer computing module L2 a. acquires left and right images from on-board color cameras,

b. acquires laser range data from an on-board laser range finder,
c. performs disparity and optical flow computation and
d. thereby forming a representation R2 containing images, laser data, disparity and optical flow, and
e. provides quality of service data according to a sufficiently high frequency of input data and processing.

**10.** A driver assistance controller according to claim 9, wherein a third layer computing module L3

a. performs a saliency computation on data included in R2,
b. receives top-down information about a spatial prior and saliency weights according to claims 3 to 4,
c. combines the saliency maps with the saliency weights and the spatial prior to determine the point of interest,
d. thereby forming a representation R3 containing the point of interest, and
e. provides quality of service data according to a sufficiently high frequency of received information R2 and processing.

**11.** A driver assistance controller according to claim 10, wherein a fourth layer computing module L4

a. performs a drive path computation on data included in R2,
b. utilizes this path to generate a spatial prior on the side of the road and on obstacles in the path,
c. utilizes this information to estimate drive path width and generates a brake target if the path becomes too narrow,
d. thereby forming a representation R4 containing the path and the spatial prior
e. sends the spatial prior as top-down information to layer L3,
f. sends the brake target (if any) as top-down information to layer L1, and
g. provides quality of service data according to a sufficiently high frequency of received information R2 and processing.

**12.** A driver assistance controller according to claim 11, wherein a fifth layer computing module L5

a. performs a segmentation and image classification based on data included in R2 around the point of interest data included in R3
b. thereby forming a representation R5 with the segmented region and the classifier result, including confidence and
c. provides quality of service data according to a sufficiently high frequency of received information R2 and R3 and processing.

**13.** A driver assistance controller according to claim 12, wherein a sixth layer computing module L6

a. performs temporal stabilization of segments and classifier results included in R5 and segment properties included in R2 over time,
b. if a sufficiently confident stabilized measurement was classified as an obstacle and is near to the vehicle, generates a brake target for that obstacle,
c. from all stabilized objects, creates a spatial prior with high activation in areas where no objects appear in the memory,
d. sends the brake target (if any) as top-down information to layer L1,
e. integrates the spatial prior with information contained in R4 and sends it as top-down information to layer L3, and
f. provides quality of service data according to a sufficiently high frequency of received information R2, R4 and R5 and processing.

**Amended claims in accordance with Rule 137(2) EPC.**

**1.** A driver assistance controller, comprising:

- a plurality of computing modules, arranged in layers (L1 ... Ln), where each computing module is provided with:

a. a. means for receiving sensorial input data,
b. means for receiving top-down information Ti, i>m, from higher layer computing modules,
c. means for sending top-down information Tm to a module of a lower layer Lj, j<m,
d. means for outputting or sending actuator commands Mm and command priorities Pm,
e. means for measuring a validity of top-down information received from a higher layer computing module, wherein the validity is measured by measuring the typical temporal behavior of the top-down information, wherein the validity of the highest layer which is valid or a default if none is valid is returned, and utilizing the returned validity to select the top-down information from the highest layer computing module that is measured to be valid or the utilizing the default,

- a central quality controller to handle quality of service information, selecting one or more motor commands according to their priorities.

**2.** The driver assistance controller according to claim 1, wherein each module

a. is designed to start in the absence of any or all of the higher layer computing modules Li, i>m,
b. reacts to top-down information received by higher layer computing modules Li, i>m as soon as they are active,
c. continues to function when any or all of the higher layer computing modules Li, i>m become inactive after having been active.

**3.** The driver assistance controller according to any one of the preceding claims, wherein the validity is computed by comparing the current age of information to the typical temporal behavior of information coming from the sending layer, and wherein information is considered invalid if it is older than the mean delay plus two a predefined time.

**4.** The driver assistance controller according to claim 3, wherein each computing module Lm

a. adapts its means for measuring validity of received top-down information from a higher layer computing module Li, i>m, by measuring the typical temporal behavior of the top-down information, and
b. declares the information invalid if the interval between two received values deviates from this usual behavior.

**5.** The driver assistance controller according to claims 1 to 4,
wherein said central quality controller receives quality of service data from all running layer computing modules and reacts to this information in order to improve the overall system quality of service.

**6.** The driver assistance controller according to claim 5, wherein said central quality controller, based on quality of service data from all running computing modules, is designed to improve the overall system quality of service by

a. distributing load among computing modules by means of setting operating system priorities in case a computing module Lm indicates insufficient computing resources,

b. restarting a computing module Lm in case it failed because of a software fault, and

c. activating a hardware backup to restart a computing module Lm in case it failed because of a hardware fault.

**7.** The driver assistance controller according to claim 6, wherein quality of service data from all running computing modules is made available by means of an on-board display system or a CAN port.

**8.** The driver assistance controller according to claims 2 to 7, wherein a first layer computing module L1

a. receives top-down information of braking target(s) in 3d space according to claims 3 to 4,

b. receives speed, and yaw information from sensors of the car,

c. if top-down targets were received, controls the braking of the car to stop before the requested target by means of generating motor commands M1, and

d. provides quality of service data according to a sufficiently high frequency of proprioceptive information and processing.

**9.** The driver assistance controller according to claim 8, wherein a second layer computing module L2

a. acquires left and right images from on-board color cameras,

b. acquires laser range data from an on-board laser range finder,

c. performs disparity and optical flow computation and

d. thereby forming a representation R2 containing images, laser data, disparity and optical flow, and

e. provides quality of service data according to a sufficiently high frequency of input data and processing.

**10.** The driver assistance controller according to claim 9, wherein a third layer computing module L3

a. performs a saliency computation on data included in R2,

b. receives top-down information about a spatial prior and saliency weights according to claims 3 to 4,

c. combines the saliency maps with the saliency weights and the spatial prior to determine the point of interest,

d. thereby forming a representation R3 containing the point of interest, and

e. provides quality of service data according to a sufficiently high frequency of received information R2 and processing.

**11.** The driver assistance controller according to claim 10, wherein a fourth layer computing module L4

a. performs a drive path computation on data included in R2,

b. utilizes this path to generate a spatial prior on the side of the road and on obstacles in the path,

c. utilizes this information to estimate drive path width and generates a brake target if the path becomes too narrow,

d. thereby forming a representation R4 containing the path and the spatial prior

e. sends the spatial prior as top-down information to layer L3,

f. sends the brake target (if any) as top-down information to layer L1, and

g. provides quality of service data according to a sufficiently high frequency of received information R2 and processing.

**12.** The driver assistance controller according to claim 11, wherein a fifth layer computing module L5

a. performs a segmentation and image classification based on data included in R2 around the point of interest data included in R3

b. thereby forming a representation R5 with the segmented region and the classifier result, including confidence and

c. provides quality of service data according to a sufficiently high frequency of received information R2 and R3 and processing.

**13.** The driver assistance controller according to claim 12, wherein a sixth layer computing module L6

a. performs temporal stabilization of segments and classifier results included in R5 and segment properties included in R2 over time,

b. if a sufficiently confident stabilized measurement was classified as an obstacle and is near to the vehicle, generates a brake target for that obstacle,

c. from all stabilized objects, creates a spatial prior with high activation in areas where no objects appear in the memory,

d. sends the brake target (if any) as top-down information to layer L1,

17 **EP 2 246 232 A1** 18

e. integrates the spatial prior with information contained in R4 and sends it as top-down information to layer L3, and

f. provides quality of service data according to a sufficiently high frequency of received information R2, R4 and R5 and processing.

Fig. 1

$L_6$: short term memory [13] | $R_6$: memory

$L_5$: Segmentation and classification [12] | $R_{5,6}$: region, class and confidence

$L_4$: Compute Drive Path [11] | $R_{4,6}$: Path spatial prior, $R_4$: drive path

$T_{4,3}, T_{6,3}$: spatial prior

$L_3$: Saliency & Point of interest [10] | $R_{3,4}$: point of interest

$L_2$: Data acquisition & preprocessing [9] | $R_{2,3,4,5,6}$: images, laser, disparity, optical flow

$T_{4,1}, T_{6,1}$: brake target

$L_1$: brake controller [8] | $M_1$: brake., $P_1$

Input data

Visual image, Laser | Car speed, yaw rate

external world

car dynamics and motor control

Command selection

Fig. 2

Functional subsystems: $L_{1,2,3,4}$

$S_4$: User-selected Task Id → $L_4$: Task Execution    $R_4$: Expected scene

$L_{1,2,3}$

$S_3$: Camera images, Laser → $L_3$: Drive Path Computation    $R_3$: Free path

$L_{1,2}$

Spatial prior

$S_?$: Visual Target Selection    $R_2$: IOR Map    $M_2, P_2$: Visual target

Top-down weights

$S_1$: Left camera image → $L_1$: Saliency computation    $R_1$: Saliency Map

Sensors

Actuators

External World

EP 2 246 232 A1

Fig. 3

**EUROPEAN SEARCH REPORT**

Application Number

EP 09 15 9143

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | BOLDER B ET AL: "Expectation-driven autonomous learning and interaction system" HUMANOID ROBOTS, 2008. HUMANOIDS 2008. 8TH IEEE-RAS INTERNATIONAL CONFERENCE ON, IEEE, PISCATAWAY, NJ, USA, 1 December 2008 (2008-12-01), pages 553-560, XP031409416 ISBN: 978-1-4244-2821-2 * paragraph [000W] * | 1-13 | INV. B60W30/08 B60W30/16 G06F9/50 G06K9/00 |
| Y | T. MICHALKE, R. KASTNER, J. ADAMY, S. BONE, F. WAIBEL, M. KLEINEHAGENBROCK, J. GAYKO, A. GEPPERTH, J. FRITSCH AND C. GOERICK: "An Attention-based System Approach for Scene Analysis in Driver Assistance" AT AUTOMATISIERUNGSTECHNIK, [Online] vol. 56, no. 11, November 2008 (2008-11), pages 575-584, XP002548837 Retrieved from the Internet: URL:www.rtr.tu-darmstadt.de/fileadmin/lite rature/rtr_08_11.pdf> [retrieved on 2009-09-28] * paragraph [000W] * | 1-13 | |
| Y | CROWLEY J L ET AL: "Autonomic computer vision systems" IEEE ADVANCED CONCEPTS FOR INTELLIGENT VISION SYSTEMS ICIVS,, 1 August 2007 (2007-08-01), pages 1-12, XP002538498 * the whole document * -/-- | 1-13 | TECHNICAL FIELDS SEARCHED (IPC) G06F G06K G08G B60W B62D B60T |

The present search report has been drawn up for all claims

| Place of search | Date of completion of the search | Examiner |
|---|---|---|
| Munich | 6 October 2009 | Breche, Philippe |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 09 15 9143

| | DOCUMENTS CONSIDERED TO BE RELEVANT | | |
|---|---|---|---|
| Category | Citation of document with indication, where appropriate, of relevant passages | Relevant to claim | CLASSIFICATION OF THE APPLICATION (IPC) |
| A | THOMAS MICHALKE ET AL: "Enhancing Robustness of a Saliency-Based Attention System for Driver Assistance" COMPUTER VISION SYSTEMS; [LECTURE NOTES IN COMPUTER SCIENCE], SPRINGER BERLIN HEIDELBERG, BERLIN, HEIDELBERG, vol. 5008, 12 May 2008 (2008-05-12), pages 43-55, XP019088815 ISBN: 978-3-540-79546-9 * paragraph [000W] * | 1-13 | |
| A | JANNIK FRITSCH ET AL: "Towards a human-like vision system for Driver Assistance" INTELLIGENT VEHICLES SYMPOSIUM, 2008 IEEE, IEEE, PISCATAWAY, NJ, USA, 4 June 2008 (2008-06-04), pages 275-282, XP031318872 ISBN: 978-1-4244-2568-6 * paragraph [000W] * | 1-13 | |
| A | THOMAS MICHALKE ET AL: "A Generic Temporal Integration Approach for Enhancing Feature-based Road-detection Systems" INTELLIGENT TRANSPORTATION SYSTEMS, 2008. ITSC 2008. 11TH INTERNATIONAL IEEE CONFERENCE ON, IEEE, PISCATAWAY, NJ, USA, 12 October 2008 (2008-10-12), pages 657-663, XP031383385 ISBN: 978-1-4244-2111-4 * abstract; figure 3 * * page 657, column 1, paragraph 1 - page 658, column 2, paragraph 4 * * page 661, column 1, paragraph 5 - page 663, column 1, last paragraph * | 1-13 | TECHNICAL FIELDS SEARCHED (IPC) |
| | | | -/-- |

The present search report has been drawn up for all claims

| Place of search | Date of completion of the search | Examiner |
|---|---|---|
| Munich | 6 October 2009 | Breche, Philippe |

EPO FORM 1503 03.82 (P04C01)

Europäisches
Patentamt

European
Patent Office

Office européen
des brevets

**EUROPEAN SEARCH REPORT**

Application Number

EP 09 15 9143

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | SUN ZEHANG ET AL: "On-road vehicle detection: a review" IEEE TRANSACTIONS ON PATTERN ANALYSIS AND MACHINE INTELLIGENCE, IEEE SERVICE CENTER, LOS ALAMITOS, CA, US, vol. 28, no. 5, 1 May 2006 (2006-05-01), pages 694-711, XP008092043 ISSN: 0162-8828 [retrieved on 2006-03-13] * paragraphs [0001], [0006], [0007], [08.4] - [0010] * | 1-13 | |
| T | MICHALKE T ET AL: "Towards a proactive biologically-inspired Advanced Driver Assistance System" 3 June 2009 (2009-06-03), INTELLIGENT VEHICLES SYMPOSIUM, 2009 IEEE, IEEE, PISCATAWAY, NJ, USA, PAGE(S) 621 - 628 , XP031489912 ISBN: 978-1-4244-3503-6 * paragraph [000W] * | 1-13 | |

TECHNICAL FIELDS
SEARCHED      (IPC)

The present search report has been drawn up for all claims

| Place of search | Date of completion of the search | Examiner |
|---|---|---|
| Munich | 6 October 2009 | Breche, Philippe |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

&: member of the same patent family, corresponding
document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **Frintrop, S. ; Backer, G. ; Rome, E.** Goal-directed search with a top-down modulated computational attention system. *Lecture notes in computer science,* 2005, vol. 3663, 117
- **Itti, L. ; Koch, C. ; Niebur, E.** A model of saliency-based visual attention for rapid scene analysis. *IEEE Transactions on pattern analysis and machine intelligence,* 1998, vol. 20 (11), 1254-1259
- **Michalke, T. ; Gepperth, A. ; Schneider, M. ; Fritsch, J. ; Goerick, C.** *Towards a human-like vision system for resource-constrained intelligent cars,* 2007

- **Goerick, C. ; Bolder, B. ; Jan⊢en, H. ; Gienger, M. ; Sugiura, H. ; Dunn, M. ; Mikhailova, I. ; Rodemann, T. ; Wersing, H. ; Kirstein, S.** Towards incremental hierarchical behavior generation for humanoids. *Proceedings of the International Conference on Humanoids,* 2007
- **Michalke, T. ; Fritsch, J. ; Goerick, C.** Enhancing robustness of a saliency-based attention system for driver assistance. *Lecture Notes in Computer Science,* 2008, vol. 5008, 43
- **Klein, R.** Inhibition of return. *Trends in Cognitive Sciences,* 2000, vol. 4 (4), 138-147
- **Michalke, T. ; Kastner, R. ; Fritsch, J. ; Goerick, C.** A generic temporal integration approach for enhancing feature-based road-detection systems. *11th Int1 Conf on Intelligent Transportation Systems,* 2008, 657-663